# EUROPEAN PATENT APPLICATION

(11) **EP 3 323 378 A1**
(43) Date of publication of application: **23.05.2018**
(21) Application number: 16199754.9
(22) Date of filing: 21.11.2016
(51) Int. Cl.: A61C 8/00

(54) **ROOT IMPLANT**

(71) Applicant: Taiwan Shan Yin International Co., Ltd., Kaohsiung City 806 (TW); Biomate Medical Devices Technology Co., Ltd., Kaohsiung City 821 (TW)
(72) Inventor: Su, Kou-Tsair, 806 Kaohsiung City (TW); Su, Yu-Jung, 806 Kaohsiung City (TW)
(74) Representative: Cabinet Chaillot

(57) **Abstract**

A root implant includes a body portion (11), a drilling portion (12) formed thereon, a positioning hole (13) formed opposite to the drilling portion, and a thread portion (14) spiraled on the body portion. The body portion and the coarse thread have respective first openings (111) and second openings (1411) which are processed by a high-energy optothermal method to be spaced apart by equal distances. The first openings and second openings accommodate accretions grown from the alveolar bone when the root implant interfaces with the alveolar bone. The body portion and the coarse thread includes first joint sections and second joint sections formed between any two of the first openings and the second openings respectively to allow the accretions to clamber and link together, thereby providing a tight combination between the root implant and the alveolar bone, preventing the loosening problem caused by an external force and promoting a positioning effect of the root implant.

## Description

### BACKGROUND OF THE INVENTION

### 1. Field of the Invention

This invention relates to an implant and relates particularly to a root implant can be fixed to the alveolar bone firmly after the root implant is placed in position.

### 2. Description of the Related Art

In the field of dentistry, dental implants are widely used for treating dental defects by implanting the dental implants into the alveolar bone. The aforementioned treatment is simply aimed at treating a single dental defect to ensure that the healed dental defect can appear like original teeth and able to bear a biting force. During the convalescence of the alveolar bone, the alveolar bone will proliferate accretions. Although the accretions can integrate with the dental implant, in view of a slippery surface of the dental implant, the slight displacements caused by an external force may result in the loosening problem of the accretions while the alveolar bone is recovered gradually. Hence, an integrated fixing effect is decreased.

In order to increase the integrated fixing effect between the dental implant and the alveolar bone, some firms advance an improved dental implant which has several pellets attached thereon. The pellets of the improved dental implant are further processed by a multi-melting sintering method to therefore form several holes on a surface of the dental implant so that the accretions can adhere to the holes, thereby providing a solid combination between the dental implant and the alveolar bone. Although the improved dental implant is processed by the multi-melting sintering method to form several holes to accommodate the accretions, an outer diameter and a depth of each hole are hardly to keep identical during the multi-melting sintering process. In other words, sizes of the holes may be different from each other so that qualities of the holes are incontrollable. Further, the multi-melting sintering method causes the surfaces of the holes to become slippery. Thus, the holes are unable to accommodate the accretions successfully to result in an ineffective combination between the dental implant and the alveolar bone. Moreover, because the pellets are distributed on the surface of the dental implant irregularly, the holes will be spaced from each other by irregular distances after the pellets are sintered. Hence, the accretions are unable to form toward a regular direction effectively when the accretions clamber between any two of the holes. Furthermore, the sintered pellets may even result in the possibility of remaining the corrosive acid. Hence, the integrated fixing effect is not preferable and this requires an improvement.

### SUMMARY OF THE INVENTION

The object of this invention is to provide a root implant which accommodates accretions regularly in order to link the root implant with the alveolar bone fixedly, prevent the loosening problem caused by an external force and increase the positioning effect of the root implant.

The root implant of this invention comprises a body portion, a drilling portion fitted on a first side of the body portion, a positioning hole formed on a second side of the body portion opposite to the drilling portion, and a thread portion spirally fitted on the body portion. The body portion is provided with a plurality of first openings formed thereon and a first joint section formed between any two of the first openings. The thread portion is composed of a coarse thread close to the drilling portion and a fine thread connected with the coarse thread and close to the positioning hole. The coarse thread is provided with a plurality of second openings formed thereon and a second joint section formed between any two of the second openings. Further, the first openings and second openings are made by a high-energy optothermal method to organize the first openings on the body portion in an equidistant arrangement and organize the second openings on the coarse thread in an equidistant arrangement. Thus, when accretions are grown from the alveolar bone toward the root implant, the accretions can adhere to the first openings and second openings after the root implant is placed in position. Meanwhile, the equidistant arrangements of the first openings and second openings and the installation of the first joint sections and second joint sections enable the accretions to reproduce toward an identical direction and distribute uniformly. Therefore, the root implant can fix to the alveolar bone firmly, increase the stability between the root implant and the alveolar bone, prevent the accretions from being unfastened by an external force, and achieve the preferable positioning effect of the root implant.

Preferably, each first opening has at least one first pore formed thereon.

Preferably, each second opening has at least one second pore formed thereon.

Preferably, the fine thread is provided with a plurality of third openings formed thereon and a third joint section are formed between any two of the third openings.

Preferably, each third opening has at least one third pore formed thereon.

### BRIEF DESCRIPTION OF THE DRAWINGS

Fig. **1** is a schematic view showing a first preferred embodiment of this invention;
Fig. **1a** is an enlarged view showing a partial element of Fig. 1;
Fig. **2** is a schematic view showing a simulation that the root implant implants into the alveolar bone;
Fig. **3** is a schematic view showing a second preferred embodiment of this invention;
Fig. **3a** is an enlarged view showing a partial element of the coarse thread of Fig. 3;
Fig. **3b** is an enlarged view showing a partial element of the fine thread of Fig. 3;
Fig. **4** is a schematic view showing a third preferred embodiment of this invention;
Fig. **4a** is an enlarged view showing a partial element of the coarse thread of Fig. 4;
Fig. **4b** is an enlarged view showing a partial element of the fine thread of Fig. 4;
Fig. **5** is a schematic view showing a fourth preferred embodiment of this invention;
Fig. **5a** is an enlarged view showing a partial element of the coarse thread of Fig. 5;
Fig. **5b** is an enlarged view showing a partial element of the fine thread of Fig. 5;
Fig. **6** is a schematic view showing a fifth preferred embodiment of this invention;
Fig. **6a** is an enlarged view showing a partial element of the coarse thread of Fig. 6; and
Fig. **6b** is an enlarged view showing a partial element of the fine thread of Fig. 6.

### DETAILED DESCRIPTION OF THE PREFERRED EMBODIMENTS

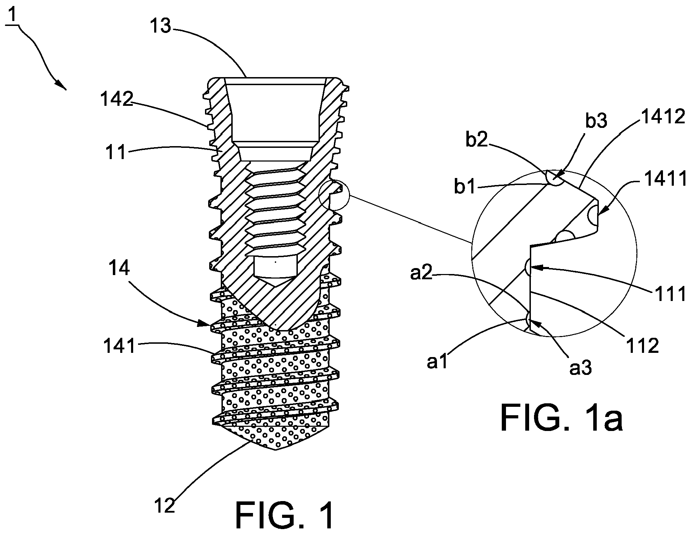

Referring to Fig. **1**, a first preferred embodiment of a root implant **1** of this invention includes a body portion **11**, a drilling portion **12** fitted on a first side of the body portion **11**, a positioning hole **13** formed on a second side of the body portion **11** and opposed to the drilling portion **12**, and a thread portion **14** fitted on the body portion **11** spirally. Referring to Fig. **1a**, the body portion **11** has a plurality of first openings **111** formed thereon. Any two of the first openings **111** define a first joint section **112**. Each first opening **111** is further divided into a first bottom wall **a1**, a first surrounding wall **a2** connected with the first bottom wall **a1**, and a first accommodation room **a3** defined by each first bottom wall **a1** and each first surrounding wall **a2**. Each first accommodation room **a3** communicates with the outside. Meanwhile, the first openings **111** are processed by a high-energy optothermal method to form the first openings **111** with precise dimensions and equidistant arrangements on the body portion **11** and form each first bottom wall **a1** and each first surrounding wall **a2** with ragged surfaces.

The thread portion **14** includes a coarse thread **141** close to the drilling portion **12** and a fine thread **142** close to the positioning hole **13** and connected with the coarse thread **141**. Hence, the root implant **1** takes advantages that the coarse thread **141** and the fine thread **142** are disposed on the body portion **11** to cut the alveolar bone **2** (not shown) effectively. The coarse thread **141** executes the drilling operation first and the fine thread **142** then follows the drilling tracks of the coarse thread **141** to further screw into the alveolar bone **2**, thereby fixing the root implant **1** to the alveolar bone **2** steadily. In this preferred embodiment, the coarse thread **141** has a plurality of second openings **1411** formed thereon. Any two of the second openings **1411** define a second joint section **1412**. Each second opening **1411** is further divided into a second bottom wall **b1**, a second surrounding wall **b2** connected with the second bottom wall **b1**, and a second accommodation room **b3** defined by each second bottom wall **b1** and each second surrounding wall **b2**, as shown in Fig. **1a**. Each second accommodation room **b3** communicates with the outside. Simultaneously, the second openings **1411** are processed by the high-energy optothermal method to provide the second openings **1411** with identical dimensions and equidistant arrangements on the coarse thread **141** and further provide each second bottom wall **b1** and each second surrounding wall **b2** with uneven surfaces.

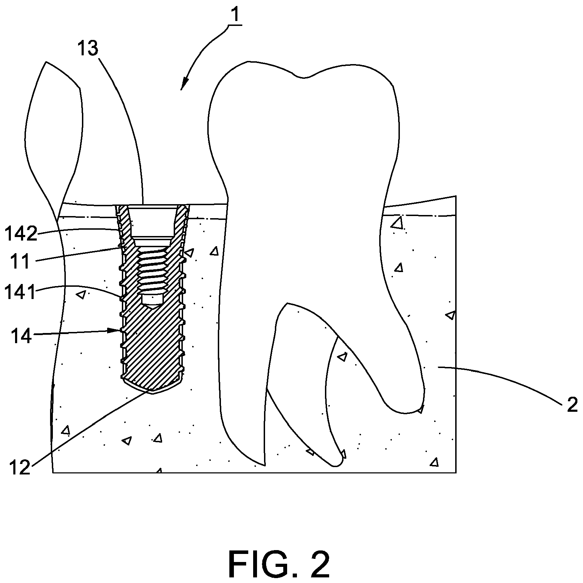

Referring to Figs. **1a** and **2**, to proceed with an implant operation, the drilling portion **12** is positioned at a pre-opened implanting hole (not shown) of the alveolar bone **2** and the positioning hole **13** receives a force from a driving tool (not shown) in order to drive the coarse thread **141** of the drilling portion **12** to cut an inner wall of the implanting hole. The coarse thread **141** therefore contacts with the inner wall of the implanting hole extensively and further screws into the implanting hole. The fine thread **142** then follows the drilling tracks of the coarse thread **141** to execute the following drilling operation and contacts with the inner wall of the implanting hole in small area. Hence, the root implant **1** takes advantages of the coarse thread **141** and fine thread **142** of the thread portion **14** to allow the root implant **1** to screw into the alveolar bone **2** quickly, thereby reducing patients' discomfort during the implant operation and achieving a stable positioning effect at the primary implant operation. Further, the first accommodation rooms **a3** and second accommodation rooms **b3** allow accretions proliferated from the alveolar bone **2** to accommodate therein during the convalescence of the alveolar bone **2** after the implant operation is finished. Besides, the ragged surfaces of the first bottom walls **a1**, the second bottom walls **b1**, the first surrounding walls **a2** and the second surrounding walls **b2** allow the accretions to adhere to the root implant 1 tightly. Moreover, the first joint sections **112** and second joint sections **1412** allow the accretions to clamber and respectively move from one first opening **111** and second opening **1411** toward another first opening **111** and second opening **1411** which are next to the first joints sections **112** and second joints sections **1412**. Hence, the accretions within any two of the first openings **111** and any two of the second openings **1411** can respectively engage to each other at the first joint sections **112** and second joint sections **1412** to form a tight combination between the root implant **1** and the alveolar bone **2**. Furthermore, the equidistant arrangements of the first openings **111** and second openings **1411** allow the accretions to distribute toward an identical direction, thereby fixing the root implant **1** to the alveolar bone **2** firmly. When the root implant **1** is moved by an improper external force caused during the convalescence of the alveolar bone **2**, the fixed connections between any two of the accretions prevent the root implant **1** from loosening, thereby enhancing the combination between the root implant **1** and the alveolar bone **2** greatly and increasing the positioning effect of the root implant **1** effectively.

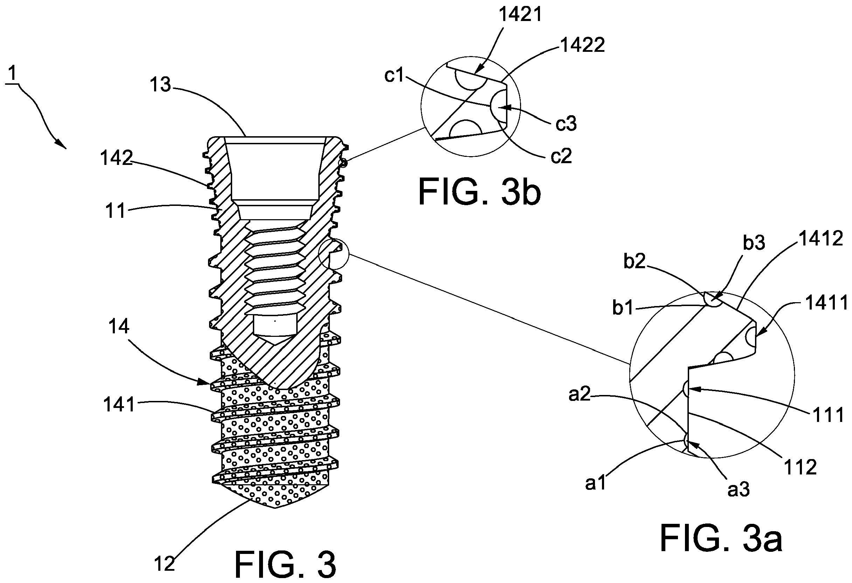

Referring to Figs. **3** and **3b** shows a second preferred embodiment of the root implant **1** of this invention. The correlated elements, the concatenation of elements, the operation and objectives of the second preferred embodiment are the same as those of the first preferred embodiment. This embodiment is characterized in that the fine thread **142** has a plurality of third openings **1421** formed thereon. Any two of the third openings **1421** define a third joint section **1422**. Each third opening **1421** is further divided into a third bottom wall **c1**, a third surrounding wall **c2** connected to the third bottom wall **c1**, and a third accommodation room **c3** defined by each third bottom wall **b1** and each third surrounding wall **c2**, as shown in Fig. **3b**. Each third accommodation room **c3** communicates with the outside. In the meantime, the third openings **1421** are processed by the high-energy optothermal method to allow the third openings **1421** to have precise dimensions and equidistant arrangements and allow each third bottom wall **c1** and each third surrounding wall **c2** to be processed with rough surfaces. Referring to Fig. **3a**, the first openings **111**, the second openings **1411** and the third openings **1421** formed on the body portion **11** the coarse thread **141** and the fine thread **142** respectively can provide different tight forces to fasten the root implant **1** to the alveolar bone **2** (not shown) effectively. Further, the first joint sections **112**, the second joint sections **1412** and the third joint sections **1422** allow the accretions to clamber in order to prevent the possibility that the accretions may loosen from the root implant **1** by the external force. Thus, the root implant **1** attains a preferable positioning effect.

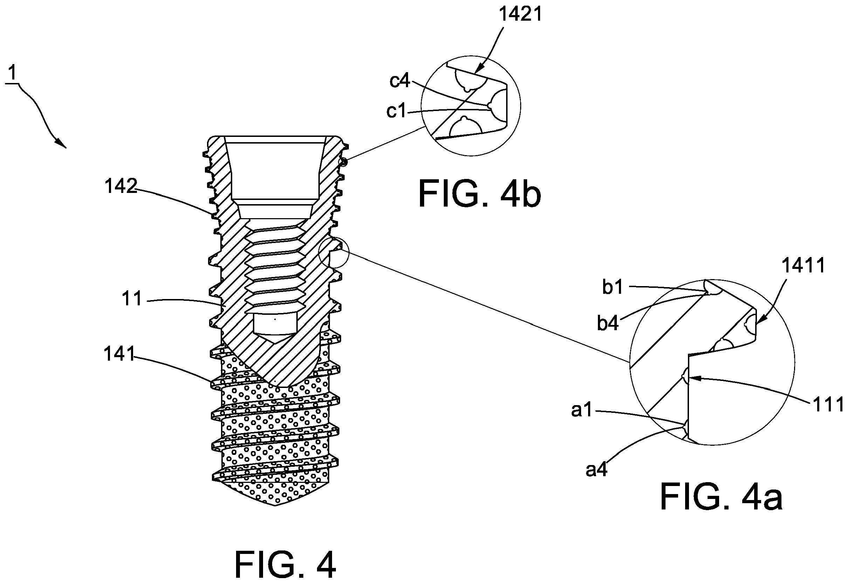

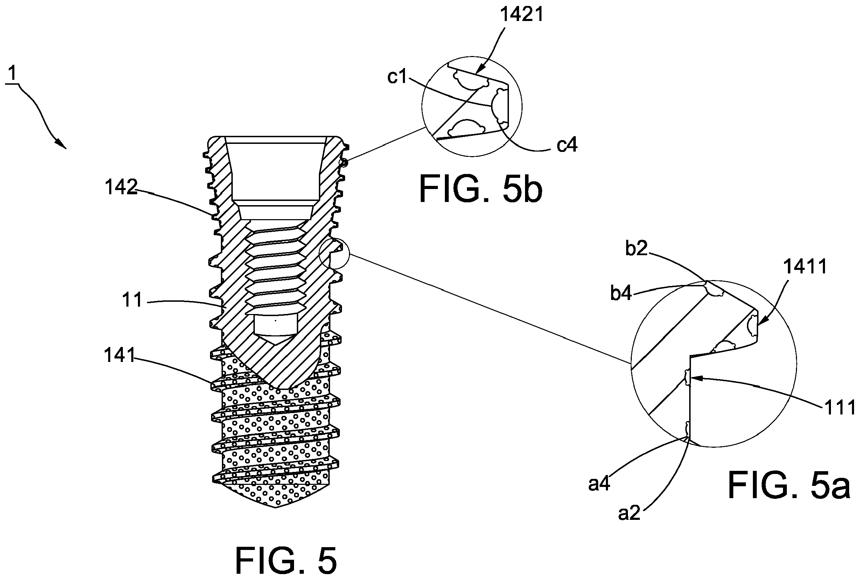

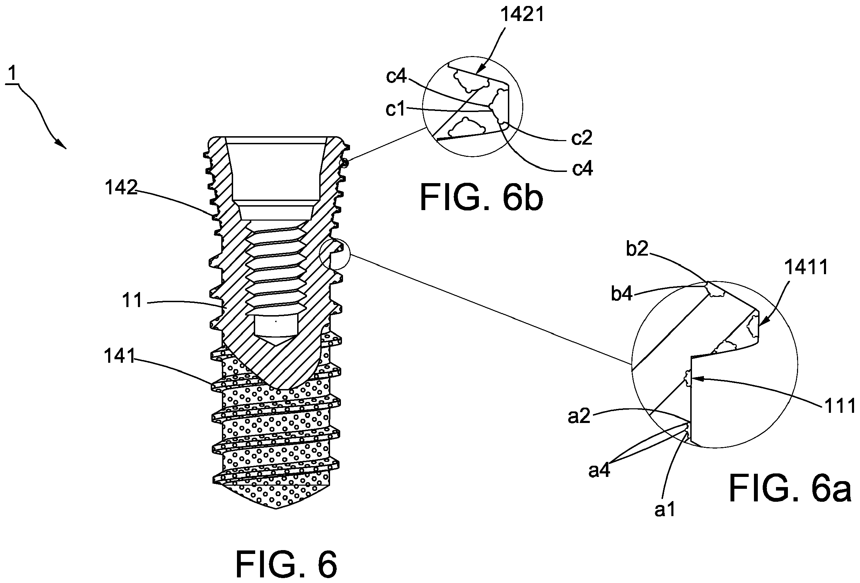

Referring to Fig. **4** showing a third preferred embodiment of the root implant **1** of this invention includes the same correlated elements, the same concatenation of elements, and the same operation and objectives as those of the first preferred embodiment. In this preferred embodiment, each first bottom wall **a1** has at least one first pore **a4** formed thereon. Each second bottom wall **b1** has at least one second pore **b4** formed thereon. Each third bottom wall **c1** has at least one third pore **c4** formed thereon, as shown in Figs. **4a** and **4b**. Besides, referring to Figs. **5a** and **5b** showing a fourth preferred embodiment, each first surrounding wall **a2** has at least one first pore **a4** fitted thereon. Each second surrounding wall **b2** has at least one second pore **b4** fitted thereon. Each third surrounding wall **c2** has at least one third pore **c4** fitted thereon. Optionally, at least one first pore **a4** can be formed on each first bottom wall **a1** and each first surrounding wall **a2** simultaneously. At least one second pore **b4** can be formed on each second bottom wall **b1** and each second surrounding wall **b2** simultaneously. At least one third pore **c4** can be formed on each third bottom wall **c1** and each third surrounding wall **c2** simultaneously, as shown in Figs. **6a** and **6b** showing a fifth preferred embodiment. Thus, the root implant **1** can be arranged according to different treatments. Further, the first pore **a4**, the second pore **b4** and the third pore **c4** are processed by the high-energy optothermal method. Thereinafter, the fifth preferred embodiment is taken as an example, as shown in Figs. **6a** and **6b**.

Referring to Figs. **6** and **6a**, in use, the accretions grown from the alveolar bone **2** (not shown) can extend to each first opening **111**, each second opening **1411** and each third opening **1421** and further adhere to each first pore **a4**, each second pore **b4** and each third pore **c4** respectively, thereby enhancing the stability between the root implant **1** and the alveolar bone **2**. Moreover, each first pore **a4**, each second pore **b4** and each third pore **c4** can accommodate the accretions therein whereby the root implant **1** can fix to the alveolar bone **2** firmly without loosening which is caused by the external force. Hence, the positioning effect of the root implant **1** is effectively increased.

To sum up, the root implant of this invention takes advantages that the first openings and the second openings are processed by the high-energy optothermal method to respectively form on the coarse thread of the thread portion and the body portion by equal distances. Therefore, the accretions can adhere to the first accommodation room of each first opening and the second accommodation room of each second opening when the root implant set in the alveolar bone. Further, the first joint section and the second joint section respectively disposed between any two of the first openings and any two of the second openings allow the accretions to accommodate in the first openings and the second openings toward the regular direction. Hence, the root implant can fasten to the alveolar bone tightly without loosening which is caused by the external force, thereby strengthening the combination between the root implant and the alveolar bone effectively and further increasing the positioning effect of the root implant greatly after the root implant is placed in position.

## Claims

1. A root implant comprising a body portion, a drilling portion formed on a first side of said body portion, a positioning hole formed on a second side of said body portion, opposite to said drilling portion, and a thread portion spirally disposed on said body portion,
wherein said body portion has a plurality of first openings formed thereon, a first joint section being formed between any two of said first openings, said thread portion being divided into a coarse thread close to said drilling portion and a fine thread connected with said coarse thread and close to said positioning hole, said coarse thread having a plurality of second openings formed thereon, a second joint section being formed between any two of said second openings, said first openings and said second openings being processed by a high-energy optothermal method to allow said first openings of said body portion to be spaced from each other by equal distances and allow said second openings of said coarse thread to be spaced from each other by equal distances, said first openings and said second openings receiving accretions after said root implant is located in position.

2. The root implant as claimed in claim 1, wherein at least one first pore is formed on each of said first opening.

3. The root implant as claimed in claim 1, wherein at least one second pore is formed on each of said second opening.

4. The root implant as claimed in claim 1, wherein said fine thread has a plurality of third openings formed thereon, a third joint section being formed between any two of said third openings.

5. The root implant as claimed in claim 4, at least one third pore is formed on each of said third opening.
